# EUROPEAN PATENT APPLICATION

(11) **EP 2 031 323 A1**
(43) Date of publication of application: **04.03.2009**
(21) Application number: 07765828.4
(22) Date of filing: 23.04.2007
(51) Int. Cl.: F24J 2/38, F24J 2/54, F24J 2/46, H01L 31/042

(54) **STAND-ALONE, INTERACTIVE MODULAR ENERGY-PRODUCTION SYSTEM**

(30) Priority: 19.06.2006 ES 200601644
(71) Applicant: Wattpic Energia Intell.ligent, S.l., 17005 Girona (ES)
(72) Inventor: SUREDA ALSINA, Francesc, E-17005 Girona (ES); SALAS PRAT, Josep Maria, E-17005 Girona (ES); JORDA BATALLER, Josep, E-17005 Girona (ES); MELSOM, Juan, E-17005 Girona (ES)
(74) Representative: Aragones Forner, Rafael Angel
(86) International application number: PCT/ES2007/000240
(87) International publication number: WO 2008/000863

(57) **Abstract**

Stand-alone, interactive modular solar-energy-production system. This system consists of an oblong frame that supports the photovoltaic field that receives the solar energy, an azimuth/zenith tracker, an actuating means generator and computerized control means. The base of the frame is supported in a rotary fashion on a shaft fixed securely in the ground and is supported by rolling means that can move in a rotary fashion over the ground with respect to said fixed shaft. During rotation, the rolling means adapt to the ground via tilting means associated with the fixed shaft that enable the frame to maintain balance. The base is coupled to said fixed shaft in an off-centre position and the rolling means, also, are off-centre with respect to said fixed shaft, which enables the frame to be oriented with respect to the wind in the manner of a wind vane.

## Description

### OBJECT OF THE INVENTION

The present invention has as its object a stand-alone, interactive and modular solar energy production system.

### FIELD OF THE INVENTION

The present invention relates to the apparatuses, plants and systems for capturing the solar energy, this latter being a practically inexhaustible, clean and nonpolluting alternative energy that in many sectors is trying to compete with the conventional energies that are progressively running out.

### BACKGROUND OF THE INVENTION

There exist different arrangements for capturing the solar energy, and from among them can be cited several patent documents such as the Canada patent no. 2139251 to MACPHEE consisting in a solar energy capturing apparatus comprising an inclined solar panel upperly closing an essentially circular, lower enclosure and being combined with a generator.

The Japanese patent no. 10-205892 to ARUMO KK consists in a solar element being made up by a lens being such as to focus the heat, this latter's energy being thereupon collected in an appropriate manner.

The German patent no. DE 19536087 to SEIFERT consists in an inclined panel being supported on a disc-shaped base being rotatable with respect to a socle.

The Spanish utility model patent no. ES 1 061 185 to SOTEL, S.L. consists in a panel being rotatable around a horizontal shaft of a framework being provided with wheels and in a position to rotate on a central shaft.

The Spanish patent no. 200000039 to Francesc SUREDA also relates to a solar energy capturing system essentially comprising in combination a photovoltaic, thermal and/or compound silicon field making up an energy capturer, an azimuthal and zenithal tracker for perpendicularly orienting during the daytime the photovoltaic, thermal and/or compound silicon field with respect to the sunrays in correspondence with the highest efficiency angle, an energy accumulator for storing energy and delivering it during the nighttime and/or in adverse weather conditions, a backup safety generator acting as an electrogenous unit for producing energy during the high consumption peaks and acting as a safety system, a parallel connection to the public mains for receiving/transferring energy, and computer means providing the information regarding the variations in the consumption of the different apparatuses of the plant and in the energy production and automatically and in an interactive manner determining the power supply to the different apparatuses.

The aforementioned patents have the drawback that in those areas being swept by very strong winds the corresponding apparatuses are unstable and can be damaged by the strong wind.

The aforementioned patent no. 200000039 to Francesc SUREDA relates to a stand-alone and interactive system whose photovoltaic field follows the sun's trajectory but does not minimise the action being exerted by the strong wind regardless of its direction.

### SUMMARY OF THE INVENTION

The aforementioned drawbacks have now been totally obviated by means of the system being the object of the present invention and comprising an oblong frame supporting the plates of the photovoltaic filed receiving the solar energy, an azimuthal and zenithal tracker for its orientation, and control computer means.

The present invention is essentially characterised in that the base of the frame is rotatably supported on a shaft being securely fixed to the ground, said base being supported by rolling means being in a position to travel on the ground and to thus bring about a rotational motion of the frame around said fixed shaft, said rolling means during the rotational motion being in a position to adapt to the ground by means of tilting means being associated to the fixed shaft and allowing the rocking of the frame, said base being coupled to said fixed shaft in an off-centre position, the rolling means being fitted to the base in an off-centre position being opposite to that of the fixed shaft, said arrangement enabling the frame to be oriented with respect to the wind in the manner of a wind vane wherein the fixed shaft makes up the axis of the wind vane and the rolling means orient the frame in such a way as to offer the lowest resistance to the wind.

According to the invention the fixed shaft is a robust shaft upperly projecting from a concrete block.

According to the present invention the frame consists in a plurality of modules being fitted together in succession and provided with the corresponding photovoltaic plates making up the photovoltaic field and allowing to fit any equal and/or different number of modules at each end of the frame.

According to the invention the base of the frame is provided with adjusting means for modifying the off-centre position of the actual base and/or of the rolling means with respect to the fixed shaft.

According to a first preferred embodiment of the present invention the frame is made up by a series of framings being arranged in a mutually juxtaposed and spaced arrangement and connected together by means of a series of longitudinal bars inferiorly making up the base of the frame and upperly making up the supports for respective holes for the passage of a longitudinal shaft on which the photovoltaic field is supported in a zenithally swingable manner, said photovoltaic field being made up of the plurality of modules being made up by successive pairs of flattened mountings being connected together by crossbars and supporting the series of respective plates as a whole forming the photovoltaic field.

According to the invention the series of framings have an isosceles triangle configuration with an upperly situated vertex and with the longer and equal sides adjoining said vertex, whereas the shorter side makes up a crossbar of the base of the frame, the three vertices of each framing being longitudinally connected to those of the other ones by the respective bars, of which the two lower bars connecting the vertices of the shorter side of the succession of framings form the base of the frame in combination with the succession of crossbars being made up by the shorter sides, and the upper bar is joined to the succession of upper vertices of the framings, these latter in correspondence with said vertices being provided with flats being provided with passage holes supporting a longitudinal, essentially horizontal rotation shaft for the rotation of the plurality of modules being fitted together in succession and supporting the series of respective plates as a whole forming the photovoltaic field, and the succession of modules supporting the plates making up the photovoltaic field comprise a structure being made up by a succession of flattened mountings having an elongated and inverted triangular configuration and being connected together by a series of crossbars, wherein the succession of vertices with holes being arranged in an inferior and centred arrangement make up the rotation axis for the rotation of the succession of flattened mountings making up the photovoltaic field, said arrangement providing for the optimum azimuthal and zenithal orientations of the photovoltaic field with respect to the wind to which the frame offers a practically null resistance.

According to this first embodiment the fixed shaft being fixed to the ground has a cylindrical and/or conical configuration at the upper free end having the frame coupling and rotation arrangement.

The tilting means consist in an oblong hole through which the shaft being fixed to the ground extends, said oblong hole being provided at a position of the fixed shaft being spaced away from the ground (T), said oblong hole thus allowing the swinging of the frame during its azimuthal rotation, as per the direction of the longer axis of the oblong hole.

The system of the invention is provided with corresponding actuating means for swinging the photovoltaic field for its zenithal orientation with respect to the sun and the wind, and with the travelling means bringing about the travelling motion by means of the rolling means for its azimuthal orientation with respect to the wind.

According to a second preferred embodiment of the invention the frame consists in an elongated, prismatic casing being inferiorly open and having a triangular cross-section, the bigger face of said casing being arranged in an inclined and fixed arrangement, said bigger face being made up by the photovoltaic field, in this casing the base of the frame being rectangular and being made up by two lateral longerons and two end crossbars.

The frame furthermore comprises the photovoltaic field being arranged in an inclined and fixed position, wherein the base of the frame comprises the two lateral longerons and the two end crossbars and is from these latter provided with sections and flats allowing to fixedly arrange the vertical, longitudinal wall and the two end walls having an inclined edge in correspondence with the photovoltaic field and thus allowing to fit the succession of modules being provided with the plates making up the photovoltaic field, said base having bearing and coupling means for the azimuthal rotation of the frame around the fixed shaft being arranged in an off-centre position, said base also having means for fitting the rolling means being positioned in a an off-centre position being opposite to that of the aforementioned fixed shaft, said rolling means being such as to bear the frame in relation with the fixed shaft having a cylindrical and/or conical configuration by means of the aforementioned small wheels being arranged in a transversal arrangement with respect to the frame and in diametrically opposite positions at both sides of the fixed shaft and resting on the block, said small wheels allowing to adapt the rolling means to the ground and thus bringing about the rocking of the frame during its rotation.

These and other characterising features will be best made apparent by the following detailed description whose understanding will be made easier by the accompanying four sheets of drawings showing a practical embodiment being cited only by way of example not limiting the scope of the present invention.

### DESCRIPTION OF THE DRAWINGS

In said drawings:
Fig. 1 is a diagrammatic plan-view of the base of the frame of the modular system of the invention.
Fig. 2 is an end side elevational view of the first preferred embodiment of the invention.
Fig. 3 is a perspective view from the back of Fig. 2.
Fig. 4 is a perspective view slightly from above of the framework of one module of the photovoltaic panel of the first embodiment and the photovoltaic plates being duly arranged but separated from the framework.
Fig. 5 is a perspective front view of the resulting apparatus making up the first embodiment of the system of the invention.
Fig. 6 is an elevational end view of the first embodiment being similar to Fig. 2 but with the photovoltaic field positioned in a horizontal position.
Fig. 7 is a perspective view slightly from above of the first embodiment.
Fig. 8 is a perspective view from the back of one of the modules of the system only comprising the bearing arrangement with respect to the fixed shaft and showing one only panel in an inclined position.
Fig. 9 is a perspective view slightly from above illustrating the oblong hole making up the tilting means of the first embodiment. Fig. 9A is a view in a plan-view diagrammatically depicting the arrangement of the oblong hole with the fixed shaft extending through it as shown in Fig. 9.
Fig. 10 is a fragmentary and perspective view of the fixed shaft with the arrangements of the intermediary oblong hole and the upper bearing and the frame.
Fig. 11 is a perspective end view of the resulting apparatus making up the second preferred embodiment of the system of the invention.
Fig. 12 is an essentially frontal view of Fig. 11.
Figs. 13a and 13b are each an inner end view of the apparatus making up the second embodiment of Figs. 11 and 12 essentially showing the bearing and coupling means for the azimuthal rotation of the base of the frame around the fixed concrete shaft and the rolling means, respectively, both being arranged in an off-centre position.
Fig. 14 illustrates in detail how the base of the frame is swingably borne by means of small wheels with respect to the concrete block of the actual fixed shaft.
Fig. 15 is a perspective and fragmentary view of the tilting means for the rocking of Fig. 4.

### DETAILED DESCRIPTION OF A PREFERRED EMBODIMENT OF THE INVENTION

According to the drawings the stand-alone, interactive and modular solar energy production system of the present invention comprises an oblong frame -1-, -1'-supporting the plates -2- of the photovoltaic field -C-receiving the solar energy, wherein the base -3- of the frame -1-, -1'- is rotatably supported on a shaft -7-, - 4- being securely fixed to the ground -T-, said base being associated to said shaft by coupling means -5- and supported by rolling means -6- being adapted to travel on the ground -T- and thus allowing the frame -1- to carry out a rotational motion -Ga- around the fixed shaft -7-, -4-, said rotational motion -Ga- allowing to obtain the adequate azimuthal orientation of the photovoltaic field -C-, and the coupling means -5- and the rolling means -6-are fitted to the aforementioned base -3- or the actual frame in an off-centre position and in an opposite position with respect to that of the fixed shaft -7-, -4-, said arrangement allowing the frame -1-, -1'- to be oriented with respect to the wind in the manner of a wind vane, the axis of said vane being made up by the aforementioned fixed shaft -7-, -4-, and the rolling means -6- allow the frame -1-, -1'- to carry out an azimuthal, rotary motion -Ga- on the ground -T- in such a way that the frame thus offers the lowest resistance to the wind.

During the rotation of the frame -1-, -1'- the rolling means adapt to the normally uneven ground -T-thanks to a rocking -B- of the frame being provided for by tilting means -23a-, -23b- being associated to the fixed shaft -7-, -4- and as described hereinafter.

According to the invention the fixed shaft -7-, -4-is a robust shaft being preferentially made of concrete - 7- and upperly projecting from a concrete block -8- being anchored in the ground -T-.

The frame -1-, -1'- of the invention consists in a plurality of modules -9- being fitted together in succession and provided with the corresponding photovoltaic plates -2- and allowing to fit any appropriate number of modules -9- at each end of the frame -1- in an equal or different number.

The invention comprises a generator -not shown- that receives the produced energy and generally activates the actuating means being operable for carrying out the azimuthal and zenithal rotations of the frame and the photovoltaic field, among others.

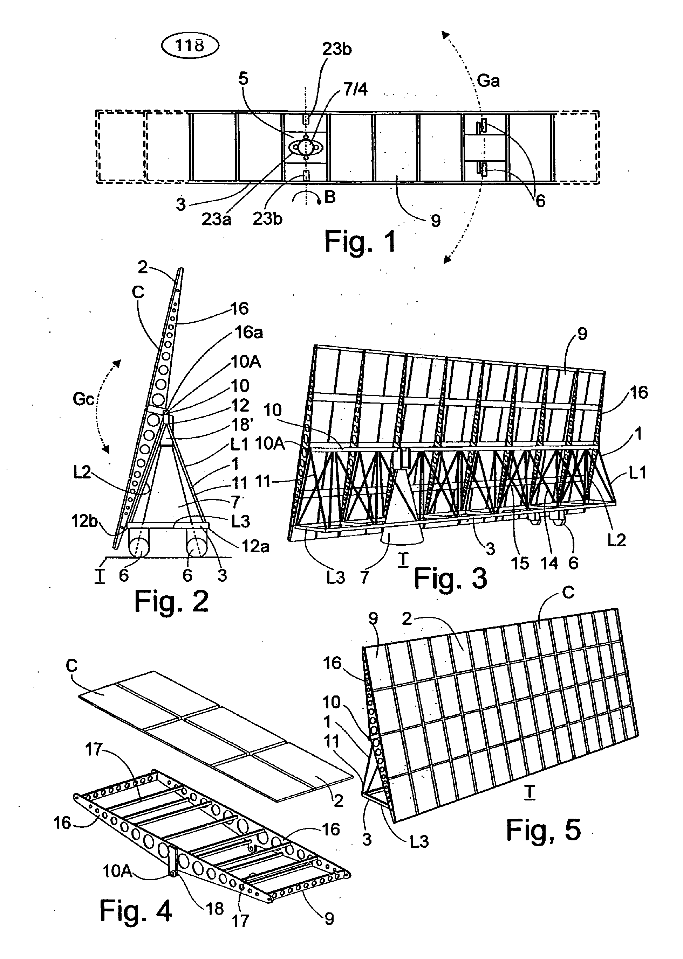

In the first embodiment being illustrated in Figs. 2 through 10 the frame -1- supports the photovoltaic field -C- being zenithally swingable around a rotation shaft - 10- being arranged in a longitudinal, essentially horizontal arrangement, said frame -1- comprising a succession of framings -11- having the shape of an isosceles triangle (see specially Figs. 2, 6, 7 and 8) with the vertex -12- being located in an upper location, and with the longer and equal sides -L₁-, L₂- adjoining said vertex -12-. The succession of framings -11- are arranged in a mutually juxtaposed and spaced arrangement and connected together by a series of longitudinal bars.

The shorter side -L₃- makes up a crossbar of the base -3- of the frame -1-, and the three vertices of each framing namely being the upper vertex -12- and the lower vertices -12a- and -12b- are longitudinally connected to those of the other framings by respective bars namely being the upper bar -13- and the lower bars -13a- and - 13b-, of which the two lower bars -13a- and -13b-connecting the vertices -12a- and -12b- of the shorter side -L₃- of the succession of framings -11- form the base -3- of the frame -1- in combination with the succession of crossbars being made up by the shorter sides -L₃-.

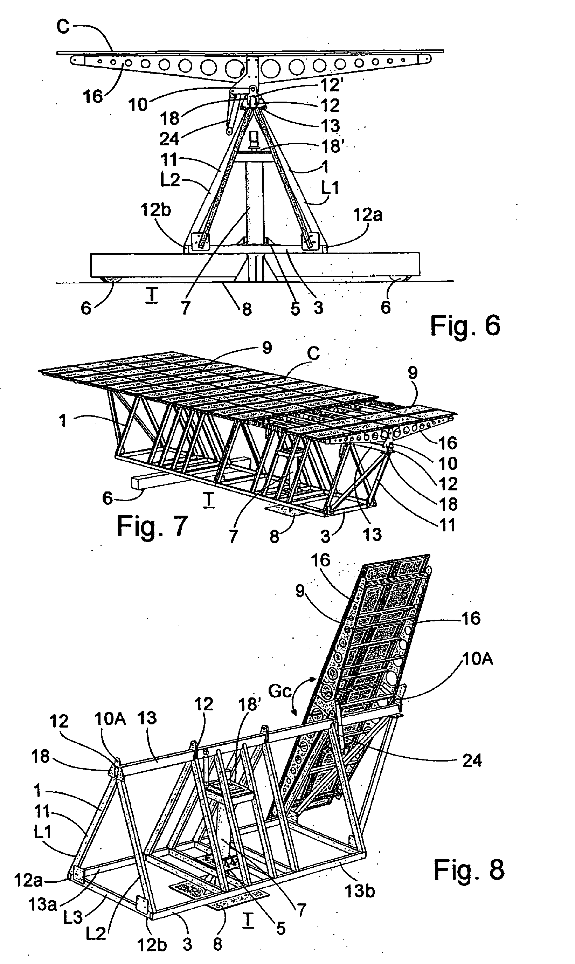

The frame -1- as is mainly illustrated in Figs. 6, 7 and 8 at each upper vertex -12- is provided with a flat - 18- having a respective passage hole -10A-, said succession of holes -10A- supporting the rotation shaft - 10- being arranged in a longitudinal arrangement and supporting the modules -9- incorporating the plates -2-and thus making up the photovoltaic field -C-. The rotation shaft -10- is situated on top of the upper bar - 13-, this latter connecting the succession of upper vertices -12- of the framings -11- of the plurality of modules -9- being fitted together in succession.

The modules -9- being fitted together in succession are made up by a structure being illustrated in Fig. 4 and diagrammatically shown in Figs. 2 through 8, said structure being made up by a succession of flattened mountings -16- having an elongated and inverted, triangular configuration and being connected to each other by a series of crossbars -17-, said flattened mountings -16- in correspondence with the vertex -16a- of the inverted triangle having a projecting plate -18-having the passage hole -10A- for supporting the rotation shaft -10-, in such a way that the succession of holes - 10A- being provided at the vertices -16a- being arranged in an inferior and centred arrangement make up the axis of the rotation shaft -10- being used for the rotation of the succession of flattened mountings -16- making up the photovoltaic field -C-. Said arrangement allows to carry out the zenithal rotation -Gc- in order to thus obtain the optimum zenithal orientation, in an essentially horizontal position as per Figs. 6 and 7, of the photovoltaic field -C- with respect to the wind, this being done by means of the articulation -24- whose arms are actuated by the actuating means -not shown-. The arrangement of the fixed shaft -7- and the rolling means -6- besides provides for the azimuthal orientation in the manner of a wind vane with respect to the wind as has been described above, said combination of both the azimuthal and the zenithal orientations allowing to achieve a practically null resistance to the wind.

The robust fixed shaft -7- being preferentially made of concrete and fixed to the ground -T- has a cylindrical (see Figs. 6, 7, 8, 9, 9A and 10) or conical (see Figs. 2 and 3) configuration being at the free upper end provided with the arrangement -18'- for the coupling and rotation of the frame -1-.

As has been described, the frame -1- is likewise provided with the conventional actuating means -not shown- for swinging the photovoltaic field -C- by means of the rotation shaft -10- for its correct zenithal orientation with respect to the sun and the wind, by means of the articulation -24-, and for causing the frame to rotationally travel in the manner of a wind vane for its correct azimuthal orientation around the fixed shaft -7-.

It can be pointed out that the frame -1- being made up by the succession of framings -11- allows the free passage of the wind, the resistance being offered by it hence practically corresponding to the whole surface of the photovoltaic field -C-.

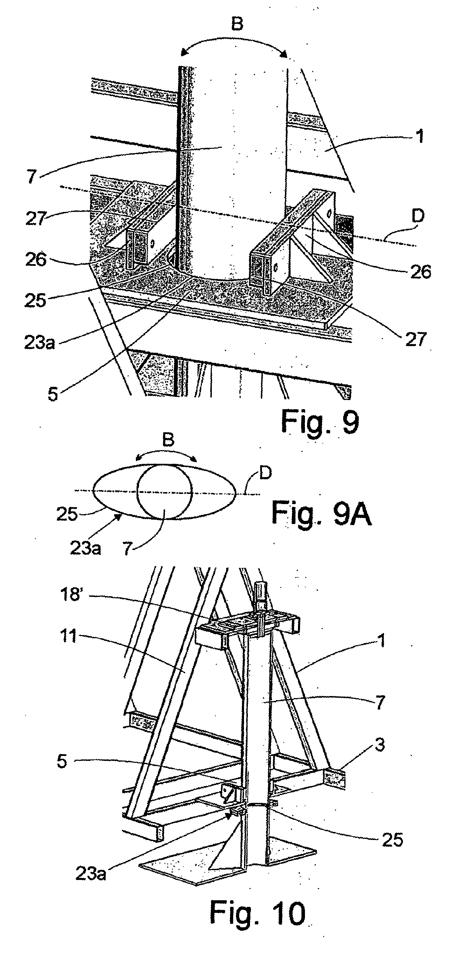

The tilting means -23a- consist in an oblong hole - 25- having the fixed shaft -7- extending through it (see Figs. 9, 9A and specially 10), the oblong hole -25- being provided in the means -5- for the coupling of the base - 3- of the frame -1- at a position of the fixed shaft -7-being spaced away from the ground -T-, said arrangement thus allowing the swinging or rocking -B- (see Figs. 9 and 9A) of the frame -1- during the rotation -Ga- as per the direction -D- of the longer axis of the oblong hole.

As illustrated in detail in Fig. 9, the aforementioned tilting means -23a- consist in respective iron flats -26- being laterally arranged with respect to the oblong hole -25- and innerly provided with respective nylon pads -27- bringing about a breach of continuity between the shaft -7- and the flats -26-, said lateral flats fixedly determining the trajectory of the shaft -7-in the swinging of the frame -1- since there is no play.

If desired, the frame -1- can incorporate reinforcing struts -14- and diagonal braces -15-.

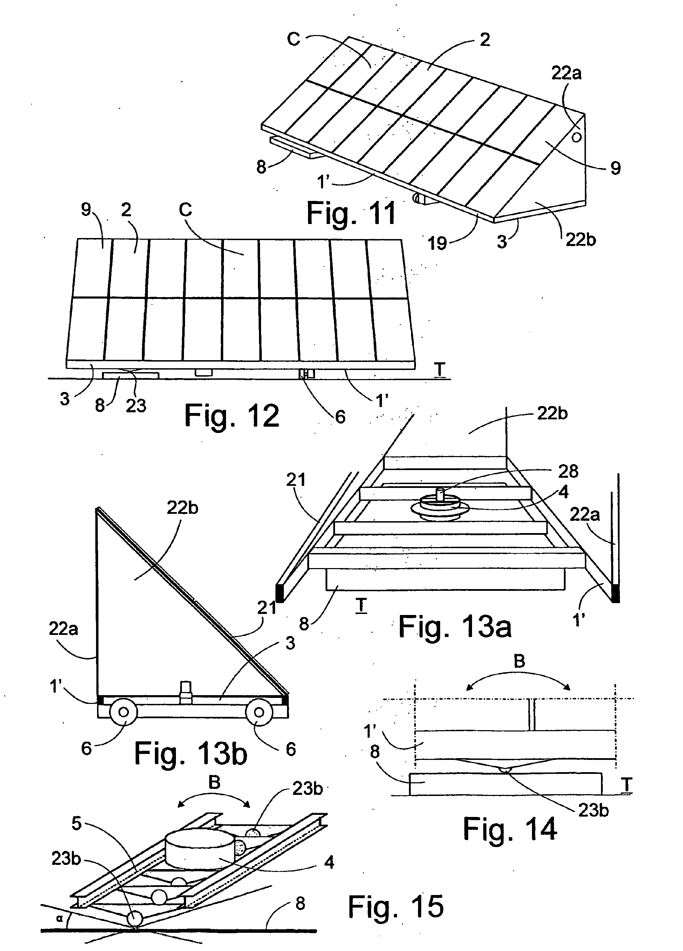

In the second embodiment being illustrated in Figs. 11, 12, 13a, 13b, 14 and 15 the frame -1'- in its turn comprises a photovoltaic field -C- being arranged in an inclined and fixed position, wherein the base -3- of the frame -1'- has an essentially rectangular configuration (see Figs. 11 through 14) being made up by two lateral longerons -19- and two end crossbars -20-, from these latter said frame being provided with sections and flats -21- fixing the vertical, longitudinal wall -22a- and the two end walls -22b- with an inclined edge being in correspondence with the bigger wall being arranged in an inclined and fixed arrangement and making up the photovoltaic field -C-, the whole assembly thus having a parallelepipedic configuration of triangular cross-section. Onto the edges of the walls are fitted the succession of modules -9- being provided with the plates -2- making up the aforementioned photovoltaic field -C-, said base -3- having bearing and coupling means -5- for the azimuthal rotation -Ga- of the frame -1'- around the fixed shaft -4- and diametrically at both sides of this latter, said base also having means for fitting the rolling means -6-. The bearing and coupling means -5- and the rolling means -6- are positioned in an off-centre position and in an opposite position with respect to the aforementioned fixed shaft -4-. The support of the frame -1'- on the fixed shaft -4- is besides carried out by means of small wheels -23b- making up the tilting means (see Figs. 14 and 15) and being positioned in a transversal arrangement with respect to the frame -1'- in correspondence with the fixed shaft -4-, said small wheels directly resting on the concrete block -8- from which the aforementioned fixed shaft -4- projects, said support being provided with the aforementioned small wheels -23- being arranged in a transversal arrangement with respect to the frame thus allowing the aforementioned rocking -B- of the frame -1'- to take place during the azimuthal rotation -Ga- of this latter being carried out by means of the rolling means -6-.

An electric collector is fitted to the fixed shaft - 4- or -7- and is provided with brushes for collecting the solar energy, said collector having a ground connection, two inputs and two outputs and a port for computer data, in such a way that the system can be conveniently acted upon in a computer-controlled manner by the corresponding technician.

The energy being captured by the system allows it to become a stand-alone system and the computer means make an interactive system of it, it being hence possible, as has been indicated, to actuate the convenient means so as to carry out the azimuthal rotation of the assembly around the fixed shaft in order to thus have it oriented in the manner of a wind vane in both embodiments, and in order to carry out the zenithal rotation of the photovoltaic field around its intermediary and lower rotation shaft so as to thus obtain the optimum orientation with respect to the wind in the first embodiment.

The base -3- of the frame -1'- is in its turn provided with adjusting means -not shown- allowing to modify the off-centre positions of the bearing/coupling means -5- for the frame (said means supporting the small wheels -23a-) and/or of the rolling means -6- with respect to the aforementioned fixed shaft -7-, -4-, said adjusting means being in a position to shift said means - 5- and/or -6- along the length of the base -3- of the frame -1-, -1'- so as to thus adjust the off-centre position of either or both means.

The invention of course provides for both embodiments to be fitted with the desired number of modules at one or the other end of the frame, said number possibly being any convenient number being either the same or different as illustrated in Fig. 8 showing some modules incorporating the fixed shaft -7-, whereas Fig. 7 illustrates the other modules incorporating the rolling mans -6-.

## Claims

1. Stand-alone, interactive and modular solar energy production system of the type comprising an oblong frame supporting the plates of the photovoltaic filed (C) receiving the solar energy, an azimuthal and zenithal tracker for its orientation, a generator of the produced energy being operable for actuating the actuating mans in general carrying out the azimuthal and zenithal motions, and control computer means; **characterised in that** the base (3) of the frame (1, 1') is rotatably supported on a shaft (7, 4) being securely fixed to the ground (T), said base being supported by rolling means (6) being in a position to travel on the ground (T) and to thus bring about a rotational motion (Ga) of the frame (1, 1') around said fixed shaft (7, 4), said rolling means (6) during the rotational motion being in a position to adapt to the ground by means of tilting means (23a, 23b) being associated to the fixed shaft (7, 4) and allowing the rocking (B) of the frame (1, 1'), said base (3) being coupled to said fixed shaft (7, 4) in an off-centre position, the rolling means (6) being fitted to the base (3) in an off-centre position being opposite to that of the fixed shaft (7, 4), said arrangement enabling the frame (1, 1') to be oriented with respect to the wind in the manner of a wind vane wherein the fixed shaft (7, 4) makes up the axis of the wind vane and the rolling means (6) orient the frame (1, 1') in such a way as to offer the lowest resistance to the wind.

2. System as per claim 1, **characterised in that** the fixed shaft (7, 4) is a robust shaft upperly projecting from a concrete block (8).

3. System as per claim 1, **characterised in that** the frame (1, 1') consists in a plurality of modules (9) being fitted together in succession and provided with the corresponding photovoltaic plates (2) making up the photovoltaic field (C) and allowing to fit any equal and/or different number of modules (9) at each end of the frame (1, 1').

4. System as per claim 1, **characterised in that** the base (3) of the frame (1, 1') is provided with adjusting means for modifying the off-centre position of the actual base (3) and/or of the rolling means (6) with respect to the fixed shaft (7, 4).

5. System as per claims 1 through 4, **characterised in that** the frame (1) is made up by a series of framings (11) being arranged in a mutually juxtaposed and spaced arrangement and connected together by means of a series of longitudinal bars (13, 13a, 13b) inferiorly making up the base (3) of the frame (1) and upperly making up the supports for respective holes (10A) for the passage of a longitudinal shaft (10) on which the photovoltaic field (C) is supported in a zenithally swingable manner (Gc), said photovoltaic field being made up of the plurality of modules (9) being made up by successive pairs of flattened mountings (16) being connected together by crossbars (17) and supporting the series of respective plates (2) as a whole forming the photovoltaic field (C).

6. System as per claim 5, **characterised in that** the series of framings (11) have an isosceles triangle configuration with an upperly situated vertex (12) and with the longer and equal sides (L₁, L₂) adjoining said vertex (12), whereas the shorter side (L₃) makes up a crossbar of the base (3) of the frame (1), the three vertices (12, 12a, 12b) of each framing (11) being longitudinally connected to those of the other ones by the respective bars (13, 13a, 13b), of which the two lower bars (13a, 13b) connecting the vertices of the shorter side (L₃) of the succession of framings (11) form the base (3) of the frame (1) in combination with the succession of crossbars being made up by the shorter sides (L₃), and the upper bar (13) is joined to the succession of upper vertices (12) of the framings (11), these latter in correspondence with said vertices being provided with flats (18) being provided with passage holes (10A) supporting a longitudinal, essentially horizontal rotation shaft (10) for the rotation of the plurality of modules (9) being fitted together in succession and supporting the series of respective plates (2) as a whole forming the photovoltaic field (C), and **in that** the succession of modules (9) supporting the plates (2) making up the photovoltaic field (C) comprise a structure being made up by a succession of flattened mountings (16) having an elongated and inverted triangular configuration and being connected together by a series of crossbars (17), wherein the succession of vertices (16a) with holes (10A) being arranged in an inferior and centred arrangement make up the rotation axis (10) for the rotation of the succession of flattened mountings (16) making up the photovoltaic field (C), said arrangement providing for the optimum azimuthal (Ga) and zenithal (Gc) orientations of the photovoltaic field (C) with respect to the wind to which the frame (1) offers a practically null resistance.

7. System as per claim 5, **characterised in that** the fixed shaft (7) being fixed to the ground (T) has a cylindrical and/or conical configuration at the upper free end having the coupling and rotation arrangement (18') for the frame (1').

8. System as per claim 5, **characterised in that** the tilting means (23a) consist in an oblong hole (25) through which the shaft (7) being fixed to the ground (T) extends, said oblong hole (25) being provided at a position of the fixed shaft (7) being spaced away from the ground (T), said oblong hole thus allowing the swinging of the frame (1) during its azimuthal rotation (Ga), as per the direction (D) of the longer axis of the oblong hole.

9. System as per claim 5, **characterised in that** it is provided with the corresponding actuating means (24) for swinging the photovoltaic field (C) for its zenithal orientation (Gc) with respect to the sun and the wind, and with the travelling means bringing about the travelling motion by means of the rolling means (6) for its azimuthal orientation (Ga) with respect to the wind.

10. System as per claims 1 through 4, **characterised in that** the frame (1') consists in an elongated, prismatic casing being inferiorly open and having a triangular cross-section, the bigger face of said casing being arranged in an inclined and fixed arrangement, said bigger face being made up by the photovoltaic field (C), in this casing the base (3) of the frame (1') being rectangular and being made up by two lateral longerons (19) and two end crossbars (20).

11. System as per claim 10, **characterised in that** the frame (1') comprises the photovoltaic field (C) being arranged in an inclined and fixed position, wherein the base (3) of the frame (1') comprises the two lateral longerons (19) and the two end crossbars (20) and is from these latter provided with sections and flats (21) allowing to fixedly arrange the vertical, longitudinal wall (22a) and the two end walls (22b) having an inclined edge in correspondence with the photovoltaic field (C) and thus allowing to fit the succession of modules (9) being provided with the plates (2) making up the photovoltaic field (C), said base (3) having bearing and coupling means (5) for the azimuthal rotation (Ga) of the frame (1') around the fixed shaft (4) being arranged in an off-centre position, said base also having means for fitting the rolling means (6) being positioned in a an off-centre position being opposite to that of the aforementioned fixed shaft (4), said rolling means being such as to bear the frame (1') in relation with the fixed shaft (4) having a cylindrical and/or conical configuration by means of the aforementioned small wheels (32b) being arranged in a transversal arrangement with respect to the frame (1') and in diametrically opposite positions at both sides of the fixed shaft (4) and resting on the block (8), said small wheels (23b) allowing to adapt the rolling means (6) to the ground (T) and thus bringing about the rocking (B) of the frame (1') during its rotation (Ga).
